(19) Europäisches Patentamt
European Patent Office
Office européen des brevets

(11) **EP 2 555 161 A1**

(12) **DEMANDE DE BREVET EUROPEEN**

(43) Date de publication:
**06.02.2013 Bulletin 2013/06**

(51) Int Cl.:
***G06T 7/00*** *(2006.01)*

(21) Numéro de dépôt: **12178718.8**

(22) Date de dépôt: **31.07.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **04.08.2011 FR 1157149**

(71) Demandeur: **Commissariat à l'Énergie Atomique et aux Énergies Alternatives 75015 Paris (FR)**

(72) Inventeurs:
- **Papp, Gergely-Istvan 38100 Grenoble (FR)**
- **Dias, Jérôme 69100 Villeurbanne (FR)**
- **Getin, Stéphane 38100 Grenoble (FR)**

(74) Mandataire: **Ilgart, Jean-Christophe BREVALEX 95 rue d'Amsterdam 75378 Paris Cedex 8 (FR)**

(54) **Procédé et dispositif de calcul d'une carte de profondeur à partir d'une unique image**

(57) Procédé de calcul d'une carte de profondeur à partir d'une image matricielle originale (10), comportant les étapes de :
- calcul d'une première image matricielle (13) correspondant à l'image matricielle originale sous-résolue et dont la profondeur de champ est similaire à celle de l'image matricielle originale,
- calcul d'une deuxième image matricielle (18) correspondant à l'image matricielle originale sous-résolue, comportant un nombre de pixels similaire à celui de la première image matricielle et dont la profondeur de champ est supérieure à celle de l'image matricielle originale,
- mise en oeuvre d'un algorithme de reconstruction tridimensionnelle de type DFD à partir de la première et de la deuxième images matricielles, délivrant en sortie la carte de profondeur.

FIG.2

EP 2 555 161 A1

**Description**

**DOMAINE TECHNIQUE**

L'invention concerne un procédé et un dispositif de calcul, ou d'estimation ou encore de reconstruction, d'images tridimensionnelles représentant visuellement les distances entre des objets ou éléments observés et l'emplacement de prise de vue de ces objets ou éléments. Dans de telles images, appelées cartes de profondeur (« depth map » en anglais), la luminosité et/ou la couleur représentées sont par exemple fonction de cette distance.

L'invention permet notamment de calculer et reconstruire une carte de profondeur à partir d'une seule image numérique matricielle originale.

L'invention concerne le domaine général de l'imagerie, et trouve des applications dans divers domaines tels que celui des équipements (caméras ou appareils photos numériques), de la surveillance, du contrôle de production industrielle, de la télémétrie (automobile, loisirs, avionique, défense), de la robotique, de l'archéologie, du guidage de véhicules, de la géologie, de la cartographie, du design, de l'imagerie appliquée en biologie, de l'imagerie médicale, des interfaces Homme-Machine, du redimensionnement d'images, ou encore de la restauration d'images.

**ÉTAT DE LA TECHNIQUE ANTÉRIEURE**

Pour construire des cartes de profondeurs, il existe des méthodes de reconstruction tridimensionnelle basées sur l'exploitation de la profondeur de champ de différentes images. Dans ce type d'approche, le dispositif d'acquisition est en général une caméra (ou un appareil photo) classique, muni d'un seul objectif optique couplé à une seule matrice de pixels. Ces méthodes exploitent généralement le niveau de flou présent dans les images acquises pour estimer l'information relative à la profondeur des éléments présents dans les images acquises.

Ces méthodes nécessitent au moins deux images prises avec des paramètres optiques différents (ouverture, focalisation, ...), mais sans changer la distribution spatiale des objets de la scène capturée, ni le dispositif d'acquisition.

Une première de ces méthodes appelée DFF (« Depth From Focus ») consiste à effectuer plusieurs prises de vue de la scène (avec une faible profondeur de champ) en décalant à chaque fois le plan de focalisation. De cette manière, sur chaque image prise, seuls les éléments se trouvant dans une « gamme de profondeurs » donnée sont nets. En recombinant ensuite les zones nettes des différentes images capturées, il est possible de construire une carte de profondeur, plan par plan. Une telle méthode est par exemple décrite dans le document « Extended depth-of-field (EDoF) using sharpness transport across colour channels » de C.L. Tisse et al., Society of Photo-Optical Instrumentation Engineers (SPIE) Conference Series, 2008, vol. 7061.

Les méthodes utilisant cette approche donnent de bons résultats en ce qui concerne la précision de la reconstruction tridimensionnelle.

Toutefois, elles nécessitent, pour la construction d'une seule carte de profondeur d'une scène, un nombre d'images très important de cette scène, ce qui pose des problèmes notamment lorsque les éléments de la scène sont en mouvement.

Une autre méthode de reconstruction tridimensionnelle, appelée DFD (« Depth From Defocus »), est basée sur la mesure du niveau de flou dans les images. En connaissant les paramètres optiques du système imageur utilisé pour l'acquisition d'images et le niveau de flou correspondant à chaque pixel, il est possible de construire une carte de profondeur.

Cette méthode est décrite dans le document « A new sense for Depth of Field » de A.P. Pentland, IEEE Transactions on pattern analysis and machine intelligence, vol. PAMI-9, n°4, Juillet 1987.

Cette méthode a toutefois pour inconvénient de nécessiter deux images de la scène prises avec des ouvertures différentes pour pouvoir construire une carte de profondeur de la scène.

Il existe des méthodes probabilistes, basées sur une phase d'apprentissage, permettant de construire une carte de profondeur à partir d'une seule image. Après avoir réalisé la phase d'apprentissage d'un logiciel mettant en oeuvre un tel apprentissage, il est possible d'appliquer ces méthodes à des images uniques. L'utilisation d'indicateurs probabilistes (champ aléatoire de Markov,...), permettant de déterminer la carte de profondeur, impose une charge computationnelle (c'est-à-dire des ressources matérielles et/ou logicielles de calcul) très importante. De plus, la phase d'apprentissage impose des typologies de scènes assez limitées (objets carrées, grande étendue géométrique, ...).

D'autres méthodes permettent de déterminer le niveau de flou présent dans chaque région d'une image originale. Ces méthodes, basées sur des transformées en ondelettes, des convolutions ou des déconvolutions, ont toutefois tendances à être lourdes au niveau computationnel, et ne donnent pas des résultats très précis.

**EXPOSÉ DE L'INVENTION**

Un but de la présente invention est de proposer un nouveau procédé et un nouveau dispositif permettant de calculer, ou d'estimer ou de construire, avec précision une carte de profondeur, ou image tridimensionnelle, à partir d'une seule image matricielle capturée par un unique dispositif d'acquisition 2D comportant une seule matrice de pixels, c'est-à-dire ne nécessitant pas l'utilisation de dispositif d'acquisition complexe ni plusieurs images de la scène, et dont la charge computationnelle permettant de calculer la carte de profondeur soit réduite.

Pour cela, la présente invention propose un procédé de calcul d'une carte de profondeur à partir d'une image matricielle originale, comportant au moins les étapes de :

- calcul d'une première image matricielle correspondant à l'image matricielle originale sous-résolue et dont la profondeur de champ est similaire à celle de l'image matricielle originale,
- calcul d'une deuxième image matricielle correspondant à l'image matricielle originale sous-résolue, comportant un nombre de pixels similaire à celui de la première image matricielle et dont la profondeur de champ est supérieure à celle de l'image matricielle originale,
- mise en oeuvre d'un algorithme de reconstruction tridimensionnelle de type DFD à partir de la première et de la deuxième images matricielles, délivrant en sortie la carte de profondeur.

Le procédé selon l'invention permet d'émuler différentes topologies du dispositif d'acquisition, ou système imageur, ayant servi à faire l'acquisition de l'image matricielle originale à partir de laquelle la carte de profondeur est calculée, en simulant a *posteriori,* c'est-à-dire après avoir réalisé l'acquisition de l'image, la profondeur de champ du dispositif d'acquisition. A partir des deux images calculées de profondeurs de champ différentes, on peut donc mettre en oeuvre un algorithme de type DFD permettant de calculer, par mesure de niveaux de flou dans les deux images calculées, une carte de profondeur.

Il est possible de calculer plus de deux images de profondeurs de champ différentes. Le nombre d'images calculées est fonction du nombre de d'images que nécessite l'algorithme DFD pour calculer la carte de profondeur.

Le calcul de la première image matricielle peut être réalisé en associant, à chaque pixel de la première image matricielle, un premier groupe de pixels adjacents de l'image matricielle originale distinct des premiers groupes de pixels associés aux autre pixels de la première image matricielle, la valeur de chaque pixel de la première image matricielle pouvant être calculée à partir des valeurs de tous les pixels du premier groupe de pixels associé au dit pixel de la première image matricielle, et/ou dans lequel le calcul de la deuxième image matricielle peut être réalisé en associant, à chaque pixel de la deuxième image matricielle, un deuxième groupe de pixels adjacents de l'image matricielle originale distinct des deuxièmes groupes de pixels associés aux autres pixels de la deuxième image matricielle, la valeur de chaque pixel de la deuxième image matricielle pouvant correspondre à la valeur d'un des pixels du deuxième groupe de pixels associé au dit pixel de la deuxième image matricielle.

Dans ce cas, les valeurs des pixels de la première image matricielle peuvent être calculées par rassemblement de pixels de l'image matricielle originale, les valeurs des pixels de la deuxième image matricielle pouvant être calculées par sous-échantillonnage de l'image matricielle originale.

Chacun des premiers et deuxièmes groupes de pixels peut former un carré d'au moins quatre pixels.

Les étapes de calcul de la première image matricielle, de calcul de la deuxième image matricielle et de mise en oeuvre de l'algorithme de reconstruction tridimensionnelle peuvent être répétées plusieurs fois en modifiant, à chaque itération, les dimensions des premiers et/ou des deuxièmes groupes de pixels et/ou une valeur d'espacement et/ou de chevauchement entre deux premiers ou deuxièmes groupes de pixels adjacents, les résultats obtenus à chaque mise en oeuvre de l'algorithme de reconstruction tridimensionnelle de type DFD pouvant être accumulés et utilisés pour calculer la carte de profondeur.

L'algorithme de reconstruction tridimensionnelle peut comporter au moins les étapes de :

- traitement numérique de la deuxième image matricielle floutant la deuxième image matricielle,
- division de la première image matricielle et de la deuxième image matricielle floutée en plusieurs groupes de pixels,
- pour chaque groupe de pixels, calcul d'une corrélation bidimensionnelle entre les groupes de pixels de la première image matricielle et les groupes de pixels de la deuxième image matricielle floutée,
- mise à jour de la carte de profondeur à partir des résultats des corrélations bidimensionnelles précédemment calculées.

Le traitement numérique de la deuxième image matricielle peut correspondre à la mise en oeuvre d'une convolution de la deuxième image matricielle par une courbe gaussienne.

Le procédé peut comporter en outre, préalablement au calcul de la première image matricielle, une étape d'acquisition de l'image matricielle originale.

L'invention concerne également un dispositif de calcul d'une carte de profondeur à partir d'une image matricielle originale, comportant au moins :

- des moyens de calcul d'une première image matricielle correspondant à l'image matricielle originale sous-résolue et dont la profondeur de champ est similaire à celle de l'image matricielle originale,
- des moyens de calcul d'une deuxième image matricielle correspondant à l'image matricielle originale sous-résolue, comportant un nombre de pixels similaire à celui de la première image matricielle et dont la profondeur de champ est supérieure à celle de l'image matricielle originale,
- des moyens de mise en oeuvre d'un algorithme de reconstruction tridimensionnelle de type DFD à partir de la première et de la deuxième images matricielles, délivrant en sortie la carte de profondeur.

Le dispositif peut comporter en outre un dispositif d'acquisition de l'image matricielle originale.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente les étapes d'un procédé de calcul d'une carte de profondeur, objet de la présente invention, à partir d'une seule image originale,
- les figures 2 à 5 illustrent les calculs des premières et deuxièmes images matricielles réalisés à partir de l'image originale lors d'un procédé de calcul d'une carte de profondeur, objet de la présente invention,
- les figures 6 et 7 représentent des exemples de cartes de profondeur obtenues lors de la mise en oeuvre d'un procédé de calcul d'une carte de profondeur, objet de la présente invention,
- la figure 8 représente de manière schématique un dispositif de calcul d'une carte de profondeur, également objet de la présente invention.

Des parties identiques, similaires ou équivalentes des différentes figures décrites ci-après portent les mêmes références numériques de façon à faciliter le passage d'une figure à l'autre.
Les différentes parties représentées sur les figures ne le sont pas nécessairement selon une échelle uniforme, pour rendre les figures plus lisibles.
Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

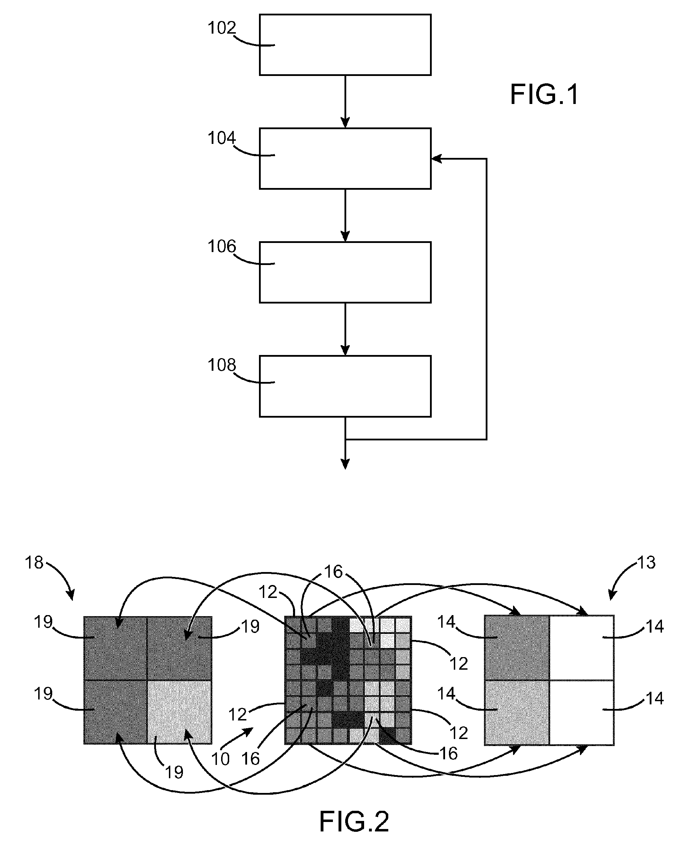

On se réfère à la figure 1 qui représente les étapes d'un procédé de calcul d'une carte de profondeur réalisé à partir d'une unique image originale.
On réalise tout d'abord une capture de la scène dont on souhaite calculer, à partir d'une seule image de cette scène, une carte de profondeur (étape 102). Pour cela, on fait l'acquisition d'une image de la scène par un dispositif d'acquisition d'image numérique, par exemple un appareil photo ou une caméra vidéo numérique, comportant notamment une optique permettant de focaliser la lumière de la scène sur une matrice de pixels du dispositif d'acquisition. Les paramètres optiques du dispositif d'acquisition (focale, ouverture de diaphragme, etc.) ainsi que la distance entre l'optique du dispositif d'acquisition et la scène sont choisis tels que l'image capturée comporte des zones nettes et des zones floues, c'est-à-dire tels que tous les éléments de la scène capturée ne soient pas inclus dans la profondeur de champ du dispositif d'acquisition. On peut choisir de réaliser de préférence l'acquisition de l'image matricielle originale avec une faible profondeur de champ, par exemple inférieure à quelques centimètres, par exemple inférieure à environ 10 cm ou 5 cm.
On calcule ensuite, par un traitement numérique de l'image matricielle originale acquise, deux images matricielles sous-résolues, c'est-à-dire de résolution (nombre de pixels) inférieure à celle de l'image matricielle originale, représentant la scène capturée, les deux images ayant des profondeurs de champ différentes (étape 104). Selon l'algorithme DFD utilisé, il est possible de calculer plus de deux images sous-résolues de profondeurs de champ différentes.
La profondeur de champ (appelée DOF) d'un système imageur, ou dispositif d'acquisition, est égale à :

$$DOF = \frac{2d_{pupille}\,g\,d_{focalisation}}{d_{pupille}^{\,2} - g^{2}} \qquad (1)$$

avec $g = \dfrac{\delta}{G_t}$

g : grain espace objet, qui représente la taille d'un pixel ramené à l'espace objet ;
$d_{pupille}$ : ouverture du diaphragme du système imageur ;
$d_{focalisation}$ : distance de focalisation du système imageur ;
$G_t$ : grandissement transversal du système imageur ;
$\delta$ : taille (dimensions d'un côté) d'un pixel du système imageur.

Les images représentant la scène capturée avec différentes profondeurs de champ vont être calculées en faisant varier « virtuellement » le paramètre $\delta$, c'est-à-dire en simulant une modification de la taille et/ou de l'espacement des pixels du système imageur. Ainsi, on émule un système imageur comprenant un capteur avec des tailles de pixels différentes de la taille réelle des pixels du système, et avec des éventuels espacements ou recouvrements entre les pixels.

Une première des deux images matricielles calculées est obtenue en réalisant un rassemblement (également appelé « binning »), ou regroupement, des pixels faisant partie de groupes de pixels voisins de l'image matricielle originale. Ainsi, on considère que les pixels de chacun de ces groupes de pixels voisins de l'image matricielle originale forment un seul macro-pixel qui correspond à un pixel de la première image matricielle calculée.

Le principe d'un tel regroupement de pixels est illustré sur la figure 2. Cet exemple est décrit ici pour une partie de l'image matricielle originale 10 correspondant à une matrice de 8×8 pixels à partir de laquelle on souhaite émuler une matrice de 2×2 macro-pixels correspondant à une matrice de 2×2 pixels de la première image matricielle calculée 13. Pour réaliser un tel rassemblement, on définit tout d'abord des fenêtres d'acquisition 12 destinées à délimiter les macro-pixels. Sur l'exemple de la figure 2, on définit des fenêtres d'acquisition 12 équivalentes à des carrés de 4×4 pixels voisins, dont la taille $W_{fenetre}$, correspondant à la dimension d'un côté d'une des fenêtres 12, correspond au nombre de pixels d'un côté d'un des groupes de pixels voisins ($W_{fenetre}$ = 4 sur l'exemple de la figure 2). Ainsi, chaque groupe de seize pixels voisins formant un carré de 4×4 pixels dans l'image matricielle originale 10 est assimilé à un seul macro-pixel de taille équivalente à celle de la fenêtre 12 et qui correspond à un seul pixel 14 de la première image matricielle calculée 13.

Dans la première image matricielle calculée 13, la valeur de chaque pixel 14 est déterminée à partir des valeurs de tous les pixels inclus dans la fenêtre d'acquisition 12 correspondant à ce pixel 14.

La valeur de chaque pixel 14 peut par exemple être égale à la valeur moyenne de tous les pixels inclus dans la fenêtre d'acquisition 12 définissant le pixel 14. Dans une variante, il est également possible de réaliser, pour le calcul de la valeur de chaque pixel 14, une moyenne pondérée des valeurs des pixels inclus dans la fenêtre 12 afin de donner un poids plus ou moins important à certains pixels. Il est également possible de ne considérer qu'une partie des pixels inclus dans une des fenêtres d'acquisition pour calculer la valeur du macro-pixel correspondant. Dans ce cas, un ou plusieurs facteurs de pondération peuvent être considérés comme nuls.

Ce calcul est réalisé pour tous les groupes de pixels de l'image matricielle originale 10, déterminant ainsi les valeurs de tous les pixels de la première image matricielle 13.

En réalisant un tel rassemblement des pixels de l'image matricielle originale 10, on calcule donc une première image matricielle 13 de résolution inférieure à celle de l'image matricielle originale 10.

On émule donc la capture de la scène par un dispositif d'acquisition qui comporterait une matrice de pixels dont les photorécepteurs auraient chacun un côté de dimension égale à $W_{fenetre}$ (cette dimension étant exprimée ici en nombre de pixels). Sur l'exemple précédemment décrit en liaison avec la figure 2, la première image matricielle 13 calculée a une résolution 16 fois inférieure à celle de l'image matricielle originale 10.

En reprenant l'équation (1) précédemment décrite, la profondeur de champ $DOF_1$ de la première image matricielle 13 calculée est égale à :

$$DOF_1 = \frac{2 d_{pupille} \, g \, W_{fenetre} \, d_{focalisation}}{d_{pupille}^{\,2} - g^2 W_{fenetre}^{\,2}} \qquad (2)$$

La profondeur de champ de la première image matricielle 13 est similaire à celle de l'image matricielle originale 10 car la différence de valeur du paramètre $W_{fenetre}$ entre ces deux images est compensée par la différence de valeur du paramètre g entre ces deux images.

On calcule ensuite, à partir de l'image matricielle originale 10, une deuxième image matricielle 18 en réalisant un sous-échantillonnage de l'image originale 10. Un tel sous-échantillonnage consiste à ne prendre un compte qu'une partie des pixels formant l'image matricielle originale 10 pour calculer les valeurs des pixels 19 de la deuxième image matricielle 18. Comme pour la première image 13 précédemment calculée, on considère la matrice de pixels de l'image originale 10 comme formée de plusieurs groupes de pixels voisins, chaque groupe de pixels représentant un macro-pixel correspondant à un pixel de la deuxième image matricielle calculée 18.

En reprenant l'exemple de la figure 2, on génère la deuxième image matricielle 18 en considérant que la valeur de chaque pixel 19 est déterminée non pas à partir des valeurs de tous les pixels inclus dans chacune des fenêtres d'acquisition 12 définissant les macro-pixels, mais en choisissant la valeur d'un des pixels inclus dans chaque fenêtre d'acquisition 12. Le pixel inclus dans chacune des fenêtres d'acquisition 12 qui sert à déterminer la valeur du pixel correspondant de la deuxième image matricielle 18 peut correspondre à un des pixels situés sensiblement au centre des fenêtres 12. Sur l'exemple de la figure 2, il est par exemple possible de choisir, dans chaque fenêtre 12, la valeur du pixel référencé 16 pour déterminer la valeur du pixel 19 correspondant.

Ce calcul est réalisé pour tous les groupes de pixels de l'image matricielle originale 10 afin de déterminer les valeurs de tous les pixels de la deuxième image matricielle 18.

De préférence, les pixels choisis dans les fenêtres d'acquisition pour le calcul de la deuxième image matricielle 18 sont régulièrement espacés les uns des autres, ce qui facilite le calcul de la deuxième image matricielle 18 et permet d'obtenir un très bon sous-échantillonnage de l'image matricielle originale 10. Toutefois, il est également possible de choisir, dans les différents groupes de pixels, pour le calcul des valeurs des pixels de la deuxième image matricielle 18, des pixels espacés différemment les uns des autres, c'est-à-dire espacés irrégulièrement les uns des autres, ce qui permet également d'obtenir une image sous-résolue 18 présentant une profondeur de champ supérieure à celle de l'image originale 10.

En réalisant un tel sous-échantillonnage de l'image matricielle originale 10, on calcule donc une deuxième image matricielle 18 dont la résolution est inférieure à celle de l'image matricielle originale 10 et similaire à celle de la première image matricielle 13 calculée (de résolution 16 fois inférieure à celle de l'image matricielle originale 10 sur l'exemple de la figure 2). Par contre, on émule la capture de la scène par un dispositif d'acquisition qui comporterait une matrice de pixels dont les photorécepteurs aurait chacun un côté de dimension égale à $2W_{fenetre}-1$ (exprimée en nombre de pixels, ici égale à 7).

Un tel sous-échantillonnage simule donc une augmentation de la profondeur de champ de l'image originale. Ainsi, pour une zone floue s'étalant sur plusieurs pixels voisins de l'image matricielle originale 10 et dont l'information, si elle était incluse dans la profondeur de champ, correspondrait à un seul pixel, un tel sous-échantillonnage permet d'éviter un débordement de l'information sur les pixels voisins, supprimant ainsi le flou.

En reprenant l'équation (1) précédemment exposée, la profondeur de champ $DOF_2$ de la deuxième image matricielle calculée 18 est égale à :

$$ DOF_2 = \frac{2d_{pupille}\, g\left(2W_{fenetre}-1\right)d_{focalisation}}{d_{pupille}^{\,2} - g^2\left(2W_{fenetre}-1\right)^2} \qquad (3) $$

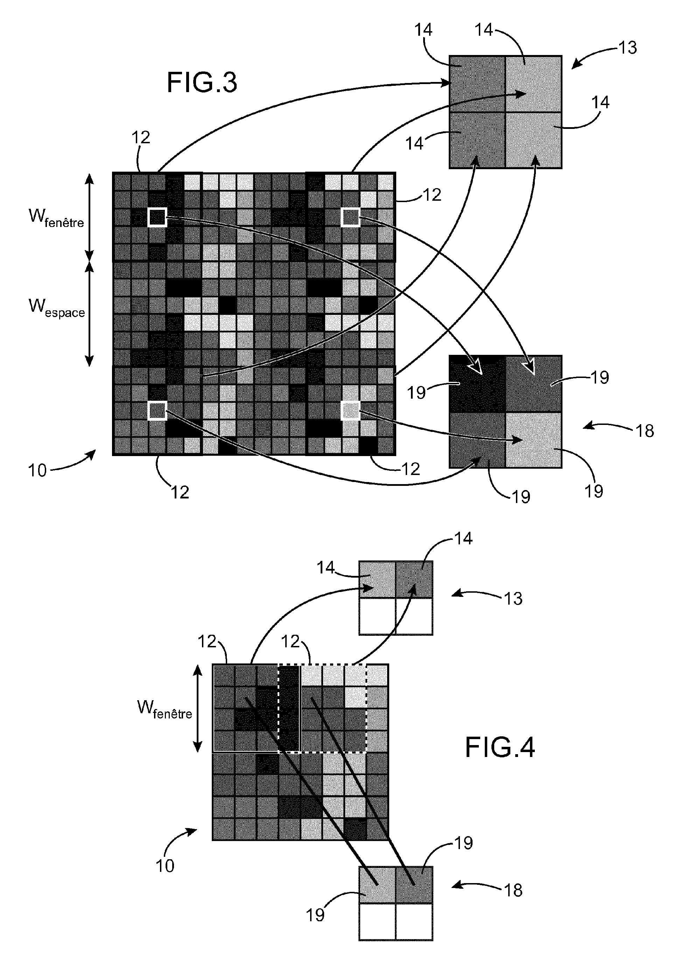

Dans l'exemple précédemment décrit en liaison avec la figure 2, les fenêtres d'acquisition 12 définissent des groupes de pixels collés les uns aux autres. Toutefois, il est possible de calculer les deux images matricielles 13 et 18 en espaçant les fenêtres d'acquisition 12 les unes des autres. Un tel exemple est représenté sur la figure 3.

Sur cette figure 3, on considère une partie de l'image matricielle originale 10 formant une matrice de 16×16 pixels. On définit les fenêtres d'acquisition 12 telles que chacune inclut un groupe de 5×5 pixels voisins de l'image originale 10, c'est-à-dire dont la taille $W_{fenetre}$ est égale à 5. Les fenêtres d'acquisition 12 voisines sont espacées les unes des autres d'une distance $W_{espace}$, également exprimée en nombre de pixels et ici égale à 6. Compte tenu de l'espacement des fenêtres d'acquisition 12, certains pixels de l'image originale 10 ne sont pas pris en compte pour calculer les deux images matricielles 13 et 18.

On calcule, par la technique de rassemblement de pixels précédemment décrite, la première image matricielle 13 dont les valeurs des pixels 14 sont chacune égale à la valeur moyenne des pixels inclus dans la fenêtre d'acquisition 12 correspondante. On génère également par sous-échantillonnage, comme décrit précédemment, la deuxième image matricielle 18 dont les valeurs des pixels 19 sont chacune égale à la valeur d'un des pixels inclus dans la fenêtre d'acquisition 12 correspondante (par exemple ici le pixel central de chaque fenêtre 12).

En considérant les espaces entre les fenêtres d'acquisition 12, la profondeur de champ $DOF_1$ de la première des deux images calculées 13 est égale à :

$$DOF_1 = \frac{2d_{pupille}\,g\left(W_{fenetre} + 2W_{espace}\right)d_{focalisation}}{d_{pupille}^2 - g^2\left(W_{fenetre} + 2W_{espace}\right)^2} \qquad (4)$$

La profondeur de champ de la seconde des deux images générées 28 est égale à :

$$DOF = \frac{2d_{pupille}\,g\left(2\left(W_{fenetre} + W_{espace}\right)-1\right)d_{focalisation}}{d_{pupille}^2 - g^2\left(2\left(W_{fenetre} + W_{espace}\right)-1\right)^2} \qquad (5)$$

Les équations (2) et (3) précédemment décrites correspondent aux équations (4) et (5) ci-dessus en prenant $W_{espace} = 0$.

Il est également possible que les fenêtres d'acquisition 12 ne soient pas espacées les unes des autres, mais qu'au contraire elles se recouvrent, ou se chevauchent partiellement, les unes par rapport aux autres. La figure 4 représente le cas où les fenêtres d'acquisition 12 se recouvrent d'un espace $W_{espace}$ égal à un pixel.

Les profondeurs de champ des deux images matricielles calculées 13 et 18 correspondent aux équations (4) et (5) précédemment décrites, la valeur de $W_{espace}$ étant dans ce cas négative.

On voit donc que $W_{fenetre}$ et $W_{espace}$ sont les paramètres qui permettent, en fonction de leurs valeurs, d'obtenir la profondeur de champ souhaitée dans les deux images matricielles 13 et 18 calculées.

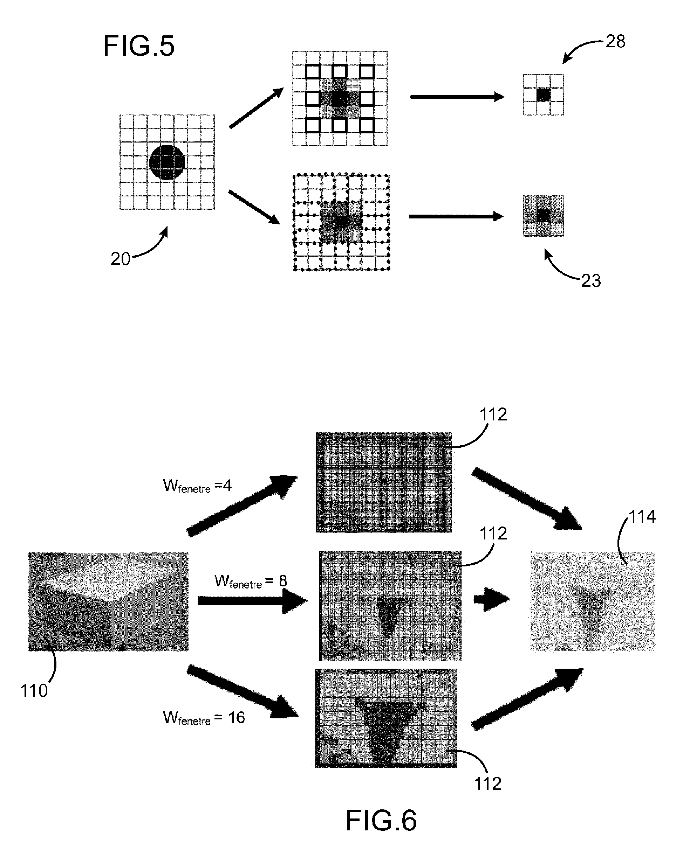

Les tailles des pixels de la première et de la deuxième images matricielles calculées peuvent être différentes selon les valeurs de $W_{fenetre}$ et $W_{espace}$ choisies. On décrit sur la figure 5 les résultats obtenus pour une tache de flou imagée sur une matrice de $7\times7$ pixels référencée 20, dont une information capturée au niveau du pixel central de la matrice 20 s'étale (cet étalement correspondant au flou) sur les pixels adjacents au pixel central. On choisit $W_{fenetre} = 3$ et $W_{espace} = -1$.

En calculant, par rassemblement de pixels, une première image matricielle 23 de manière analogue au calcul précédemment décrit de la première image matricielle 13, on voit que la tache de flou se retrouve dans tous les macro-pixels considérés, et donc dans tous les pixels de la première image matricielle calculée 23 avec des intensités différentes. Chaque macro-pixel a ici une taille équivalente définie par

$$W_{fenetre} + 2W_{espace} = 1\ pixel.$$

La tache de floue est donc répartie, dans cette première image 23, dans une zone de taille correspondant à $3\times3$ pixels de la matrice initiale 20.

En appliquant un sous-échantillonnage à l'image originale 20, on obtient une seconde image matricielle 28, la valeur de chaque macro-pixel correspondant à la valeur du pixel central de chaque fenêtre d'acquisition. Dans cette seconde image matricielle 28, la tache de flou se retrouve seulement dans le macro-pixel central. Toutefois, chaque macro-pixel a ici une taille équivalente (dimension d'un côté) à trois pixels car :

$$2\left(W_{fenetre} + W_{espace}\right)-1 = 3.$$

La tache de floue est donc également répartie, dans cette seconde image 28, dans une zone de taille correspondant à $3\times3$ pixels de la matrice initiale 20.

Ainsi, dans le cas de la première image matricielle 23, du fait que la tache de floue se retrouve sur les 9 pixels de la première image 23, cela signifie que la profondeur de champ de cette première image 23 est la même que celle de l'image originale 20, et dans le cas de la seconde image 28, la profondeur de champ est augmentée par rapport à celle de l'image originale 20. Dans les deux cas, la résolution, ou taille, de l'image est réduite, passant de $7\times7$ pixels à $3\times3$ pixels.

Après avoir calculé les deux images matricielles 13 et 18 de profondeurs de champ différentes, on met en oeuvre un algorithme de reconstruction tridimensionnelle de type DFD permettant de calculer, à partir des deux images matricielles précédemment calculées, l'une par rassemblement de pixels et l'autre par sous-échantillonnage, une carte de profondeur de l'image matricielle initiale (étape 106). On décrit brièvement ci-dessous les principes d'un exemple d'un tel algorithme DFD.

On réalise tout d'abord un traitement numérique de la deuxième image matricielle 18 (celle calculée par sous-échantillonnage) afin de flouter artificiellement cette image. Un tel traitement numérique peut consister par exemple à réaliser une convolution de cette deuxième image par une courbe gaussienne. On émule ainsi une situation dans laquelle toute la scène capturée se trouverait dans un même plan en dehors de la profondeur de champ du dispositif imageur.

On réalise ensuite un maillage de la première image matricielle 13 et de la deuxième image matricielle 18 floutée consistant à diviser ces images en plusieurs régions, c'est-à-dire en plusieurs groupes de pixels, par exemple de formes rectangulaires.

Pour chaque région, ou chaque groupe de pixels, on calcule une corrélation 2D, c'est-à-dire bidimensionnelle, entre les deux images, région par région. Les résultats de cette corrélation permettent de calculer la carte de profondeur de l'image matricielle originale par déduction de la quantité de flou présente entre les deux images.

Des détails et précisions concernant la mise en oeuvre d'un tel algorithme DFD sont décrits par exemple dans le document « A new method for creating a depth map for camera auto focus using an all in focus picture and 2D scale space matching » de Earl Wong, International conference on acoustics, Speech and signal Processing, 2006, 14-16 mai, Toulouse, France, PP III - III. Dans ce document, l'algorithme DFD réalise un calcul d'une corrélation entre deux images (sélection d'une seule des images capturées avant de calculer la corrélation).

On obtient ainsi une carte de profondeur pour une valeur donnée de $W_{fenetre}$ et une valeur donnée de $W_{espace}$. Les étapes 104 et 106 sont répétées afin d'obtenir d'autres cartes de profondeur pour d'autres valeurs de $W_{fenetre}$ et de $W_{espace}$. Les différentes cartes de profondeur obtenues sont ajoutées au fur et à mesure les unes aux autres (étape 108) afin d'obtenir à la fin du procédé une carte de profondeur globale, les cartes de profondeur étant moyennées après interpolation. Dans l'exemple d'algorithme DFD précédemment décrit, pour chaque région des deux images sous-résolues, la valeur de la corrélation 2D obtenue est prise en compte si celle-ci est supérieure aux valeurs précédemment obtenues lors des itérations précédentes, la carte de profondeur étant dans ce cas mise à jour pour la région concernée, la courbe gaussienne pouvant varier à chaque itération.

On calcule donc, à chaque itération, une paire d'image matricielle correspondant à l'image originale sous-résolue, et on calcule, à partir de cette paire d'images sous-résolues et de profondeurs de champ différentes, une carte de profondeur, les cartes de profondeurs obtenues lors des différentes itérations étant sommées, ce qui permet de réduire l'importance des points ambigus (points apparaissant lorsque les fonctions de flou des deux images ne changent pas de paliers aux mêmes profondeurs) et d'accéder à tous les plans de profondeur de la scène de manière cohérente.

Les paramètres $W_{fenetre}$ et $W_{espace}$ sont par exemple choisis tels que :

$$W_{fenetre} \in [4;18]$$

$$W_{espace} \in \left[ -\frac{W_{fenetre}}{2}+1; 0; \frac{W_{fenetre}}{2} \right]$$

La valeur de $W_{fenetre}$ est dans ce cas un entier variant de 4 à 18. La valeur de $W_{espace}$ est un entier prenant la valeur $-W_{fenetre}/2$, 0 ou $W_{fenetre}/2$. Les valeurs maximale et minimale de $W_{fenetre}$ sont par exemple déterminées empiriquement en fonction notamment de la résolution de l'image originale. On peut mettre en oeuvre le procédé en choisissant la valeur de $W_{fenetre}$ dans une gamme de valeurs comportant par exemple entre 2 et 20 valeurs différentes.

La valeur de $W_{espace}$ correspond à la gamme de profondeurs considérée dans la scène capturée, et les différentes valeurs de $W_{fenetre}$ correspondent aux différents plans de profondeur à l'intérieure de la gamme de profondeurs fixée par $W_{espace}$. Il est possible de choisir la valeur de $W_{espace}$ dans une gamme de valeurs comportant par exemple entre 2 et 20 valeurs différentes.

L'algorithme de reconstruction tridimensionnelle DFD peut être mis en oeuvre en réalisant un nombre d'itération compris entre environ 20 et 50 (égal à 45 dans l'exemple précédemment décrit).

La figure 6 représente des cartes de profondeur 112 obtenues à partir d'une image originale 110 avec $W_{espace}$ = $-W_{fenetre}/2$ + 1 et $W_{fenetre}$ égal à 4, 8 et 16, ces cartes de profondeur 112 étant sommées au sein d'une carte de profondeur 114 représentative de l'espacement $W_{espace}$ = $-W_{fenetre}/2$ + 1.

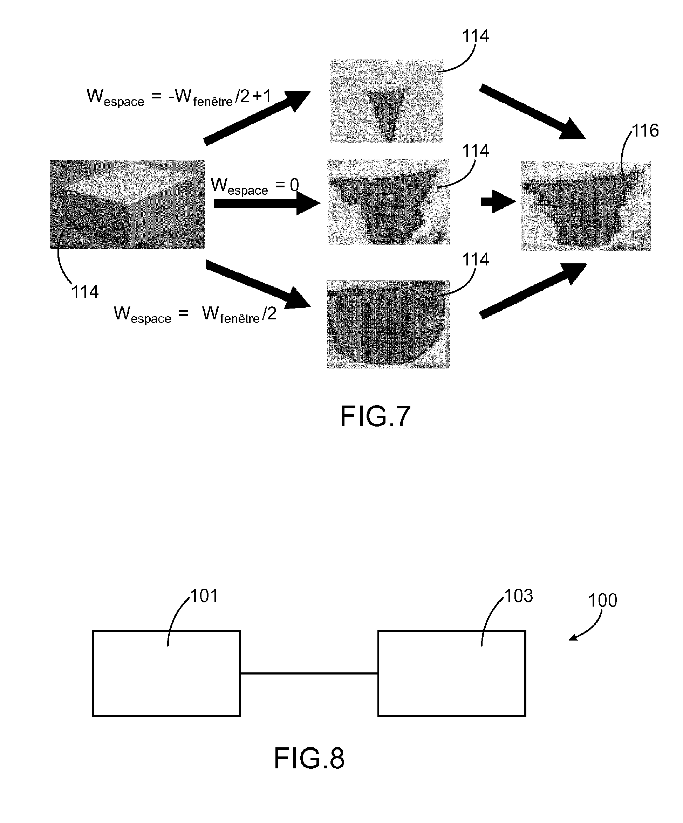

En faisant varier $W_{espace}$, on recombine les cartes de profondeur 114 obtenues avec les différents espacements au sein d'une carte de profondeur globale 116 reflétant avec précision les différentes profondeurs des éléments capturés dans l'image originale 110 (voir figure 7).

En faisant varier le positionnement des fenêtres d'acquisition, on obtient une carte de profondeur globale 116 ayant la même résolution que l'image originale 110. Des couleurs différentes sont par exemple utilisées dans la carte de profondeur globale pour représenter les différents niveaux de profondeur. L'image originale peut également être appliquée en texture sur la carte de profondeur globale 116 obtenue afin de reconstruire de manière tridimensionnelle la scène originale capturée.

Dans les exemples précédemment décrits, les fenêtres d'acquisition servant à définir les macro-pixels sont de formes rectangulaires, par exemple carrés, et de tailles similaires. Toutefois, il est possible de choisir des fenêtres d'acquisition, que ce soit lors de la génération de l'image par rassemblement de pixels et/ou lors de la génération de l'image par sous-échantillonnage, de tailles différentes d'un macro-pixel à l'autre et/ou de forme différentes (rectangulaires non carrées ou même de forme non rectangulaire, par exemple hexagonales). La forme de fenêtres d'acquisition 12 peut également être choisie telle qu'elle se rapproche d'une forme circulaire, c'est-à-dire une forme proche des tâches de flou capturées, ou ellipsoïdale afin de prendre en compte les éventuelles aberrations optiques pouvant déformer les tâches de flou.

On décrit ci-dessous les principes d'un second exemple d'algorithme de reconstruction tridimensionnelle de type DFD permettant de calculer, à partir des deux images matricielles 13 et 18 précédemment calculées, l'une par rassemblement de pixels et l'autre par sous-échantillonnage, une carte de profondeur de l'image matricielle initiale.

La distance plan principal - objet $d_{objet}$ est égale à :

$$d_{objet} = \frac{f d_{capteur}}{d_{capteur} - f - \sigma k n} \qquad (6)$$

avec :

f : distance focale du système optique

n : distance focale / ouverture diaphragme

$d_{capteur}$ : distance lentille - capteur

σ : variance de la fonction d'étalement (PSF), c'est-à-dire sa largeur à mi-hauteur

k : constante de proportionnalité entre σ et le diamètre d'une tâche de flou (traduisant les paramètres inconnus du dispositif d'acquisition utilisé).

Si l'on suppose que l'on connait parfaitement le système optique, on peut déterminer la distance $d_{objet}$ correspondant à un point de l'image, en déterminant l'étalement de la réponse impulsionnelle correspondante.

On commence par prendre un voisinage autour d'un point dans les deux images matricielles 13 et 18 précédemment calculées :

$f_1(r,\theta)$ : voisinage pris dans l'image nette, ici la deuxième image matricielle 18 obtenue par sous-échantillonnage ;
$f_2(r,\theta)$ : voisinage pris de l'image floue, ici la première image matricielle 13 obtenue par rassemblement de pixels.

La fonction d'étalement (PSF) du système optique utilisé est une fonction gaussienne $G(r,\sigma)$.

Le niveau de flou est également invariant dans les deux voisinages.

On calcule la transformée de Fourier des deux voisinage :

$$F1 = TF(f_1)$$

$$F2 = TF(f_2)$$

On suppose qu'il existe un voisinage ($f_0$) net partout qui satisfait :

$$f_1(r,\theta) = f_0(r,\theta) \otimes G(r,\sigma_1) \quad \text{et} \quad f_2(r,\theta) = f_0(r,\theta) \otimes G(r,\sigma_2)$$

On peut donc écrire :

$$\frac{F_1(\lambda)}{F_2(\lambda)} = \frac{F_0(\lambda)G(\lambda,1/2\pi\sigma_1)}{F_0(\lambda)G(\lambda,1/2\pi\sigma_2)} = \frac{G(\lambda,1/2\pi\sigma_1)}{G(\lambda,1/2\pi\sigma_2)} = exp\left(\lambda^2 2\pi^2\left(\sigma_2^2 - \sigma_1^2\right)\right)$$

En considérant que le voisinage $f_1$ est net partout ($f_1=f_0$), on peut écrire :

$$\sigma_1 = 0$$

Ce qui donne :

$$\sigma_2 = \sqrt{\frac{ln(F_1) - ln(F_2)}{\lambda^2 2\pi^2}}$$

En remplaçant $\sigma_2$ dans l'équation (6), on obtient la distance $d_{objet}$ correspondant à la profondeur associée au point image considéré.

Les détails de mise en oeuvre d'un tel procédé DFD sont décrits par exemple dans le document « A new sense for Depth of Field » de A.P. Pentland, IEEE Transactions on pattern analysis and machine intelligence, vol. PAMI-9, n°4, juillet 1987.

L'algorithme de reconstruction tridimensionnelle DFD est par exemple implémenté par un logiciel de calcul mathématique tel que le logiciel MATLAB, traitant l'image originale sous la forme d'un fichier informatique, les données de l'image originale étant conservées sans être compressées. Un tel logiciel peut réaliser le calcul des différentes paires d'images matricielles sous-résolues et de profondeurs de champ différentes, et également implémenter l'algorithme DFD permettant d'obtenir la carte de profondeur.

La figure 8 représente un dispositif 100 de calcul d'une carte de profondeur à partir d'une image matricielle originale. Le dispositif 100 comporte un dispositif d'acquisition 101, par exemple un appareil photo numérique couplé à un objectif optique, permettant de capturer la scène et délivrer l'image matricielle originale 10. Le dispositif 100 comporte également des moyens informatiques 103 aptes à calculer les différentes paires d'images matricielles 13 et 18 correspondant à l'image originale sous-résolue et de profondeurs de champ différentes. Les moyens 103 permettent également de mettre en oeuvre l'algorithme de reconstruction tridimensionnelle DFD, permettant de calculer, à partir des différentes paires d'images, la carte de profondeur. Les moyens informatiques 103 comportent par exemple un ou plusieurs ordinateurs sur lesquels des moyens logiciels tels que le logiciel de calcul MATLAB, sont installés. Les moyens informatiques 103 peuvent être couplés au dispositif d'acquisition 101, comme représenté sur la figure 8, afin que des échanges de données puissent être réalisés depuis le dispositif d'acquisition 101 vers les moyens informatiques 103. Le dispositif d'acquisition 101 peut également être piloté par les moyens informatiques 103.

**Revendications**

1. Procédé de calcul d'une carte de profondeur (116) à partir d'une image matricielle originale (10, 110), comportant au moins les étapes de :

- calcul d'une première image matricielle (13) correspondant à l'image matricielle originale sous-résolue et dont la profondeur de champ est similaire à celle de l'image matricielle originale (10, 110),
- calcul d'une deuxième image matricielle (18) correspondant à l'image matricielle originale sous-résolue, comportant un nombre de pixels similaire à celui de la première image matricielle (13) et dont la profondeur de champ est supérieure à celle de l'image matricielle originale (10, 110),
- mise en oeuvre d'un algorithme de reconstruction tridimensionnelle de type DFD à partir de la première (13) et de la deuxième (18) images matricielles, délivrant en sortie la carte de profondeur (116).

2. Procédé selon la revendication 1, dans lequel le calcul de la première image matricielle (13) est réalisé en associant, à chaque pixel (14) de la première image matricielle (13), un premier groupe de pixels adjacents de l'image matricielle originale (10, 110) distinct des premiers groupes de pixels associés aux autre pixels (14) de la première image matricielle (13), la valeur de chaque pixel (14) de la première image matricielle (13) étant calculée à partir des valeurs de tous les pixels du premier groupe de pixels associé au dit pixel (14) de la première image matricielle (13), et/ou dans lequel le calcul de la deuxième image matricielle (18) est réalisé en associant, à chaque pixel (19) de la deuxième image matricielle (18), un deuxième groupe de pixels adjacents de l'image matricielle originale (10, 110) distinct des deuxièmes groupes de pixels associés aux autres pixels (19) de la deuxième image matricielle (18), la valeur de chaque pixel (19) de la deuxième image matricielle (18) correspondant à la valeur d'un des pixels (16) du deuxième groupe de pixels associé au dit pixel (19) de la deuxième image matricielle (18).

3. Procédé selon la revendication 2, dans lequel chacun des premiers et deuxièmes groupes de pixels forme un carré d'au moins quatre pixels.

4. Procédé selon l'une des revendications 2 ou 3, dans lequel les étapes de calcul de la première image matricielle (13), de calcul de la deuxième image matricielle (18) et de mise en oeuvre de l'algorithme de reconstruction tridimensionnelle sont répétées plusieurs fois en modifiant, à chaque itération, les dimensions des premiers et/ou des deuxièmes groupes de pixels et/ou une valeur d'espacement et/ou de chevauchement entre deux premiers ou deuxièmes groupes de pixels adjacents, les résultats (112, 114) obtenus à chaque mise en oeuvre de l'algorithme de reconstruction tridimensionnelle de type DFD étant accumulés et utilisés pour calculer la carte de profondeur (116).

5. Procédé selon l'une des revendications précédentes, dans lequel l'algorithme de reconstruction tridimensionnelle comporte au moins les étapes de :

- traitement numérique de la deuxième image matricielle (18) floutant la deuxième image matricielle (18),
- division de la première image matricielle (13) et de la deuxième image matricielle (18) floutée en plusieurs groupes de pixels,
- pour chaque groupe de pixels, calcul d'une corrélation bidimensionnelle entre les groupes de pixels de la première image matricielle (13) et les groupes de pixels de la deuxième image matricielle (18) floutée,
- mise à jour de la carte de profondeur (116) à partir des résultats (112, 114) des corrélations bidimensionnelles précédemment calculées.

6. Procédé selon la revendication 5, dans lequel le traitement numérique de la deuxième image matricielle (18) correspond à la mise en oeuvre d'une convolution de la deuxième image matricielle (18) par une courbe gaussienne.

7. Procédé selon l'une des revendications précédentes, comportant en outre, préalablement au calcul de la première image matricielle (13), une étape d'acquisition de l'image matricielle originale (10, 110).

8. Dispositif (100) de calcul d'une carte de profondeur (116) à partir d'une image matricielle originale (10, 110), comportant au moins :

- des moyens (103) de calcul d'une première image matricielle (13) correspondant à l'image matricielle originale sous-résolue et dont la profondeur de champ est similaire à celle de l'image matricielle originale (10, 110),
- des moyens (103) de calcul d'une deuxième image matricielle (18) correspondant à l'image matricielle originale sous-résolue, comportant un nombre de pixels similaire à celui de la première image matricielle (13) et dont la profondeur de champ est supérieure à celle de l'image matricielle originale (10, 110),
- des moyens (103) de mise en oeuvre d'un algorithme de reconstruction tridimensionnelle de type DFD à partir de la première (13) et de la deuxième images matricielles (18), délivrant en sortie la carte de profondeur (116).

9. Dispositif (100) selon la revendication 8, comportant en outre un dispositif (101) d'acquisition de l'image matricielle originale (10, 110).

FIG.1

FIG.2

FIG.3

$W_{fenêtre}$

$W_{espace}$

FIG.4

$W_{fenêtre}$

FIG.5

FIG.6

$W_{espace} = -W_{fenêtre}/2 + 1$

$W_{espace} = 0$

$W_{espace} = W_{fenêtre}/2$

114

114

114

114

116

## FIG.7

101

103

100

## FIG.8

**EP 2 555 161 A1**

<table>
<tr><td></td><td>Europäisches Patentamt<br>European Patent Office<br>Office européen des brevets</td><td>**RAPPORT DE RECHERCHE EUROPEENNE**</td><td>Numéro de la demande<br>**EP 12 17 8718**</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | ALEX PAUL PENTLAND: "A New Sense for Depth of Field", I.E.E.E.TRANSACTIONS ON PATTERN ANALYSIS AND MACHINE INTELLIGENCE,, vol. PAMI-9, no. 4, 1 juillet 1987 (1987-07-01), pages 523-531, XP001375688, ISSN: 0142-8828 * abrégé * * section II-B * ----- | 1-9 | INV.<br>G06T7/00 |
| A,D | WONG E: "A New Method for Creating a Depth Map for Camera Auto Focus Using an All in Focus Picture and 2D Scale Space Matching", ACOUSTICS, SPEECH AND SIGNAL PROCESSING, 2006. ICASSP 2006 PROCEEDINGS . 2006 IEEE INTERNATIONAL CONFERENCE ON TOULOUSE, FRANCE 14-19 MAY 2006, PISCATAWAY, NJ, USA,IEEE, PISCATAWAY, NJ, USA, vol. 3, 14 mai 2006 (2006-05-14), pages III-1184, XP010930780, DOI: 10.1109/ICASSP.2006.1660871 ISBN: 978-1-4244-0469-8 * abrégé * * sections 3-5 * ----- | 1-9 | |
| A | WANG Y F ET AL: "3D shape and motion analysis from image blur and smear: a unified approach", PROCEEDINGS ON THE INTERNATIONAL CONFERENCE ON COMPUTERVISION, XX, XX, 4 janvier 1998 (1998-01-04), pages 1029-1034, XP002398151, * section 2.1 * ----- | 1-9 | DOMAINES TECHNIQUES RECHERCHES (IPC)<br><br>G06T |

-/--

Le présent rapport a été établi pour toutes les revendications

| Lieu de la recherche | Date d'achèvement de la recherche | Examinateur |
|---|---|---|
| Munich | 5 septembre 2012 | Eveno, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Europäisches
Patentamt

European
Patent Office

Office européen
des brevets

**RAPPORT DE RECHERCHE EUROPEENNE**

Numéro de la demande

EP 12 17 8718

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2009/268985 A1 (WONG EARL QUONG [US] ET AL) 29 octobre 2009 (2009-10-29) * le document en entier * ----- | 1-9 | |
| A | CHAUDHURI S ET AL: "Simultaneous estimation of super-resolved scene and depth map from low resolution defocused observations", IEEE TRANSACTIONS ON PATTERN ANALYSIS AND MACHINE INTELLIGENCE, IEEE SERVICE CENTER, LOS ALAMITOS, CA, US, vol. 25, no. 9, 1 septembre 2003 (2003-09-01), pages 1102-1117, XP011100736, ISSN: 0162-8828, DOI: 10.1109/TPAMI.2003.1227986 * section 2 * ----- | 1-9 | |
| A | MORENO-NOGUER F ET AL: "Active refocusing of images and videos", ACM TRANSACTIONS ON GRAPHICS: TOG, ACM, US, vol. 26, no. 3, 1 juillet 2007 (2007-07-01), pages 67-1, XP002610925, ISSN: 0730-0301, DOI: 10.1145/1239451.1239518 * sections 3-5 * ----- | 1-9 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 5 septembre 2012 | Eveno, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 17 8718

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2012

| Document brevet cité au rapport de recherche | Date de publication | Membre(s) de la famille de brevet(s) | Date de publication |
|---|---|---|---|
| US 2009268985 A1 | 29-10-2009 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C.L. TISSE et al.** Extended depth-of-field (EDoF) using sharpness transport across colour channels. *Society of Photo-Optical Instrumentation Engineers (SPIE) Conference Series,* 2008, vol. 7061
- **A.P. PENTLAND.** A new sense for Depth of Field. *IEEE Transactions on pattern analysis and machine intelligence,* Juillet 1987, vol. PAMI-9 (4
- **EARL WONG.** A new method for creating a depth map for camera auto focus using an all in focus picture and 2D scale space matching. *International conference on acoustics, Speech and signal Processing,* 14 Mai 2006, III-III